# EUROPEAN PATENT APPLICATION

(11) **EP 2 644 243 A1**
(43) Date of publication of application: **02.10.2013**
(21) Application number: 12162612.1
(22) Date of filing: 30.03.2012
(51) Int. Cl.: B01D 46/06

(54) **Bag filter basket for supporting a baghouse filter bag**

(71) Applicant: Alstom Technology Ltd, 5400 Baden (CH)
(72) Inventor: Hjelmberg, Anders, 352 44 Växjö (SE); Peco, Faruk, 393 59 Kalmar (SE)

(57) **Abstract**

A bag filter basket for supporting a baghouse filter bag (28). The bag filter basket comprises a sheet material provided with a plurality of surface openings (41) and formed to a hollow body (43) having wave-shaped cross section. The surface openings (41) have rounded gas inlet edges (42) as seen from an outer side (44) to an inner side (45) of the hollow body (43), the outer side (44) of the hollow body (43) being adapted to support the filter bag (28).

## Description

### Field of the Invention

The present disclosure relates to a bag filter basket for supporting a baghouse filter bag, which basket comprises a sheet material provided with a plurality of surface openings and formed to a hollow body having wave-shaped cross section.

### Background of the Invention

Industrial processes, such as physical or chemical processes for the fabrication, transformation, or combustion of goods or materials, may generate particulate matter carried by a process gas. In order to reduce emissions of particulate matter to the atmosphere, the process gas is often filtered in a gas cleaning plant before being discharged into the atmosphere. US 2011/0258976 A1 discloses a baghouse filter for such purposes.

A baghouse filter often comprises a large number of tubular filter bags supported by filter cages. It is therefore desirable to produce such bag cages in a cost efficient manner. Furthermore, it is desirable to reduce mechanical loads on the filter bags supported by such bag cages.

US 2011/0258976 A1 discloses a baghouse filter cage which comprises a plurality of tubular filter bags, each of which is retained in its tubular shape by a filter cage formed from a so-called expanded metal element. The baghouse filter cage disclosed in US 2011/0258976 A1 may reduce the cost of production to some extent. However, the use of such a filter cage may damage the filter bag supported by the cage.

### Summary of the Invention

It is an object to overcome the above described problems, and to provide an improved bag filter basket.

This and other objects that will be apparent from the following summary and description are achieved by a bag filter basket, and a method for forming a bag filter basket, according to the appended claims.

According to an aspect of the present disclosure, there is provided a bag filter basket for supporting a baghouse filter bag, which basket comprises a sheet material provided with a plurality of surface openings and formed to a hollow body having wave-shaped cross section. The surface openings have rounded gas inlet edges as seen from an outer side to an inner side of the hollow body, the outer side of the hollow body being adapted to support the filter bag.

Since the surface openings have rounded gas inlet edges a gentle contact surface supporting a filter bag is provided, which reduces wear of the bag fabric. Consequently, the service life of filter bags may be improved. Furthermore, a bag filter basket having desired performance with respect to factors such as, e.g., flow resistance, weight, cost, stiffness and cleaning efficiency, may be manufactured in a very cost efficient manner.

According to an embodiment the rounded edges at the surface openings may have radii in the range of 0.2-3 mm.

Preferably, the surface openings are circular.

According to an embodiment the sheet material is a wire mesh material. This embodiment has the advantage that the wire mesh material may provide rounded gas inlet edges, in the form of radii, favourable to fabric support by its circular shape. There is thus no need for forming the radius during manufacturing. Also, the mesh provides cage strength.

Preferably the wires of the wire mesh material have a circular cross section with a diameter in the range of 0.4-2 mm and more preferably the wires of the wire mesh material have a circular cross section with a diameter in the range of 0.6-1.2 mm.

Preferably, the distance between adjacent wires of the wire mesh material is in the range of 3-25 mm and more preferably in the range of 5-15 mm.

According to an embodiment the sheet material is a punched sheet material. This embodiment has the advantage that the basket can be manufactured in a very cost-efficient manner.

Preferably, the punched sheet material has surface openings with rounded inlet edges having a curvature over the thickness of the material to avoid any sharp edges that could cause bag wear. The punched sheet material may have surface openings with rounded inlet edges having a radius in the range of t/2-2t, where t is the thickness of the sheet material.

According to an embodiment a first coupling edge of the sheet material is connected to a second coupling edge of the sheet material by means of a releasable fastening arrangement. The coupling edges may then be joined in a simple manner. Furthermore, the coupling edges may be joined on the site of use, which allows for simplified storage, handling and/or transporting from the site of manufacture.

According to an embodiment the fastening arrangement comprises a hinge device adapted to permanently join a first longitudinal coupling edge of the first body wall element with a first longitudinal coupling edge of the second body wall element. Thereby the basket may be transported in a partly assembled state.

According to an embodiment a first coupling edge of the sheet material is connected to a second coupling edge of the sheet material by means of a snap-lock device. This allows a quick, simple and tool-free assembly of the bag filter basket.

According to an embodiment the hollow body comprises a first body wall element and a second body wall element, said first and second body wall elements being interconnected along longitudinal coupling edges by means of a fastening arrangement, which allows for simplified storage, handling and/or transporting from the site of manufacture. A filter bag basket may thus be transported as separate parts, i.e. in the form of wall elements, and assembled at the site of use, which reduces transportation costs significantly.

Preferably, the fastening arrangement comprises a fastening device adapted to releasably join a second longitudinal coupling edge of the first basket wall element with a second longitudinal edge of the second basket wall element in order to facilitate assembling of the basket at cite.

According to another aspect, there is provided a method of forming a filter bag basket. The method comprises providing a blank of sheet material having a plurality of surface openings with rounded gas inlet edges at a first side of the blank, and forming from said blank a hollow body having wave-shaped cross section and having the first side with the rounded inlet edges forming the outer side of the hollow body, thereby forming the bag filter basket.

According to an embodiment the step of forming from said blank a hollow body having wave-shaped cross section and having the first side with the rounded inlet edges forming the outer side of the hollow body comprises passing the blank of sheet material through a roll forming tool. The production method of roll forming is well suited for elongated products. Furthermore, roll forming is well suited to manufacture a basket having the desired performance. Hence, roll forming allows a filter bag basket to be manufactured in a simple and cost-efficient manner.

According to an embodiment the step of providing a blank of sheet material having plurality of openings with rounded gas inlet edges comprises punching, thereby providing the surface openings.

According to an embodiment the step of forming a hollow body comprises pressing the blank of sheet material in a pressing tool.

According to an embodiment the step of forming a hollow body from said blank of sheet material comprises providing at least a first and a second hollow body element and joining the at least two hollow body elements at longitudinal coupling edges.

According to another aspect of the present disclosure, there is provided a bag filter basket for supporting a baghouse filter bag, which basket comprises a first and a second bag filter basket segment which are connected by a coupling device, the coupling device comprising a resilient locking member, an outer coupling member arranged at the first bag filter basket segment and having an interior slot for receiving the resilient locking member, and, an inner coupling member arranged at the second bag filter basket segment and having an exterior slot for receiving the resilient locking member, wherein one of the inner and outer slots is configured to fully accommodate the locking member when the locking member is in a mounting state, and both slots are configured to partly accommodate the locking member when the locking member is in a locking state such that the inner coupling member is locked to the outer coupling member.

Such a coupling device allows the basket segments to be joined without changing the cross section of the basket. Hence, a constant cross section at the joint between the bag filter segments may be ensured. By providing a constant cross section at the joint, the filter bag may be fully supported by the basket and the filter bag may be protected from e.g. sharp edges at the joint. Furthermore, the joining procedure may be easily carried out by one operator alone. Also, the joining of bag filter segments requires no tools.

According to an embodiment the resilient locking member is configured to be contracted to be fully accommodated in one of the inner and outer slots.

According to an embodiment the resilient locking member is a circumferential ring, preferably a tension ring.

According to an embodiment the locking member has a notch which prevents relative rotation between the inner and outer coupling member.

According to an embodiment at least one of the inner and outer coupling members is a circumferential ring.

According to an embodiment the coupling device comprises a covering portion having a profile similar to at least one of the first and second filter basket segments. The covering portion may support the filter bag and ensure a constant cross section of the basket at the joint. The covering portion thus allows the cross section of the basket to persist at the joint and protects the bag from sharp edges at the joint. Preferably the covering portion comprises a metal strip.

According to another aspect of the present disclosure, there is provided a method of supporting a baghouse filter bag using a bag filter basket comprising a sheet material provided with a plurality of surface openings and formed to a hollow body having wave-shaped cross section, that said surface openings have rounded gas inlet edges as seen from an outer side to an inner side of the hollow body, the outer side of the hollow body being adapted to support the filter bag, wherein the bag filter basket supports the filter bag.

According to another aspect of the present disclosure, there is provided a method of connecting a first bag filter basket segment to a second bag filter basket segment to form a bag filter basket for supporting a baghouse filter bag using a coupling device, the coupling device comprising a resilient locking member, an outer coupling member arranged at the first bag filter basket segment and having an interior slot for receiving the resilient locking member and, an inner coupling member arranged at the second bag filter basket segment and having an exterior slot for receiving the resilient locking member, wherein one of the inner and outer slots is configured to fully accommodate the locking member when the locking member is in a mounting state, and both slots are configured to partly accommodate the locking member when the locking member is in a locking state such that the inner coupling member is locked to the outer coupling member, wherein the coupling device connects the first and second bag filter basket segments.

### Brief description of the drawings

The invention will now be described in more detail with reference to the appended drawings in which:
Fig. 1 is a schematic side view in cross section of a bag house filter;
Fig. 2a is a schematic perspective side view illustrating a bag filter basket according to an embodiment of the present disclosure;
Fig. 2b is a schematic cross sectional view of the bag filter basket shown in Fig. 2a;
Fig. 3a is a schematic cross sectional view illustrating a bag filter basket according to a second embodiment at an intermediate stage during assembly;
Fig. 3b is a schematic cross sectional view illustrating the bag filter basket in Fig. 3a in an assembled state;
Fig. 4 is a schematic perspective side view illustrating a bag filter basket according to a third embodiment of the present disclosure.
Figs. 5a-e are schematic views illustrating a method for forming a bag filter basket according to an embodiment of the present disclosure.
Fig. 6 is a schematic view illustrating an alternative method for forming a bag filter basket according to an embodiment of the present disclosure.
Figs. 7a-c are a schematic perspective side views illustrating a first and a second bag filter basket segment and a coupling device for coupling them together.
Figs. 8a-c illustrate coupling of a first bag filter basket segment to a second bag filter segment by the connecting device shown in Figs. 7a-c.

### Description of preferred embodiments

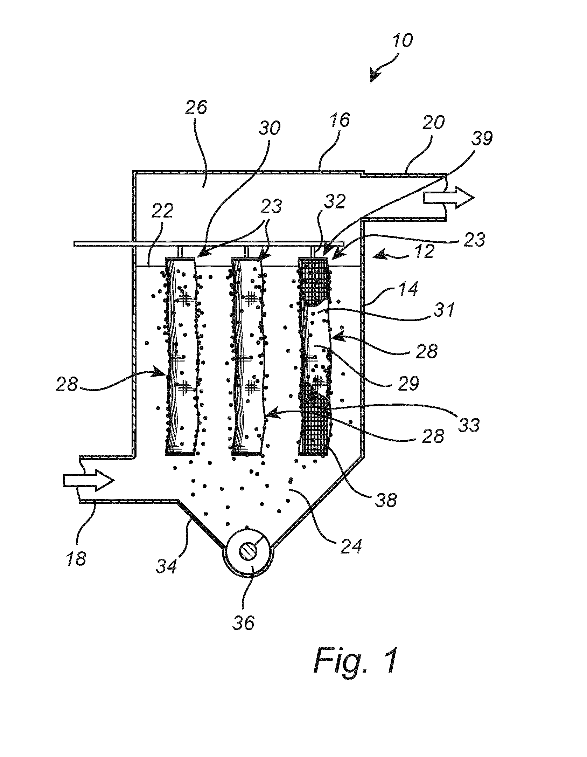

Fig. 1 is a schematic illustration of a baghouse filter 10. The baghouse filter 10 comprises a housing 12 divided into a lower housing portion 14 and an upper housing portion 16. The lower housing portion 14 is provided with a raw gas inlet 18, for receiving raw, particle-laden gas generated by an industrial process. Throughout this disclosure, raw gas is defined as particle-laden gas, originating from an industrial process, to be cleaned in a gas cleaning device. The raw gas entering baghouse filter 10 via inlet 18 may, by way of example, be flue gas from a boiler (not illustrated) located upstream with respect to a gas flow direction, of baghouse filter 10. The raw gas arriving at baghouse filter 10 may be completely uncleaned, or as an alternative, may already have been subject to some initial cleaning in any upstream located gas cleaning equipment, such as an electrostatic precipitator. The upper housing portion 16 is provided with a cleaned gas outlet 20, for channelling gas cleaned by baghouse filter 10 to any equipment (not shown) located downstream of baghouse filter 10. Such equipment located downstream of baghouse fabric filter 10 may, by way of example, be equipment for subsequent, additional cleaning of the gas, or a smoke stack for discharging the cleaned gas into the atmosphere.

A horizontal plate 22 is arranged in housing 12 to divide the space defined by housing 12 into a raw gas inlet chamber 24, located below horizontal plate 22, and a cleaned gas outlet chamber 26, located above horizontal plate 22. The raw gas inlet chamber 24, defined by lower housing portion 14 and horizontal plate 22, is fluidly connected to raw gas inlet 18. Cleaned gas outlet chamber 26 defined by upper housing portion 16 and horizontal plate 22, is fluidly connected to cleaned gas outlet 20. In each of a plurality of openings 23 in horizontal plate 22, a filter bag 28 is arranged. Each such filter bag 28, which may comprise a filter material such as fabric 29, extends through one opening 23 in horizontal plate 22. Typically, a baghouse filter 10 may comprise 2 to 20,000 such filter bags 28, and usually, for larger installations, comprises at least 20. In operation, raw gas enters raw gas inlet chamber 24 via raw gas inlet 18. The gas flows through the fabric 29 of bags 28 and into the interior 33 of the filter bags 28, while dust particles are collected on the outside 31 of the fabric 29 of filter bags 28, such that the gas, when flowing through the fabric 29 of the filter bags 28, is cleaned. The cleaned gas flows via the interior 33 of the filter bags 28, through the openings 23 of horizontal plate 22, into the cleaned gas outlet chamber 26, and leaves the baghouse filter 10 via the cleaned gas outlet 20.

Occasionally, it is necessary to remove collected dust particles from the filter bags 28. To this end, a pulsing gas duct 30 is arranged in the upper portion 16 of the baghouse filter 10. The pulsing gas duct 30 is provided with one pulsing nozzle 32 for each of the filter bags 28. When it has been determined that it is suitable to remove collected dust particles from the filter bags 28, a short pulse of gas is directed, via the pulsing gas duct 30 and the respective pulsing nozzles 32, into the filter bags 28. As an effect of such pulsing gas, the filter bags 28 expand rapidly, causing most, if not all, of the dust collected thereon to be released from the filter bags 28. Such released dust falls down into a hopper 34 of the lower portion 14 of the housing 12. Occasionally, the dust is removed from the hopper 34 by means of, for example, a screw 36.

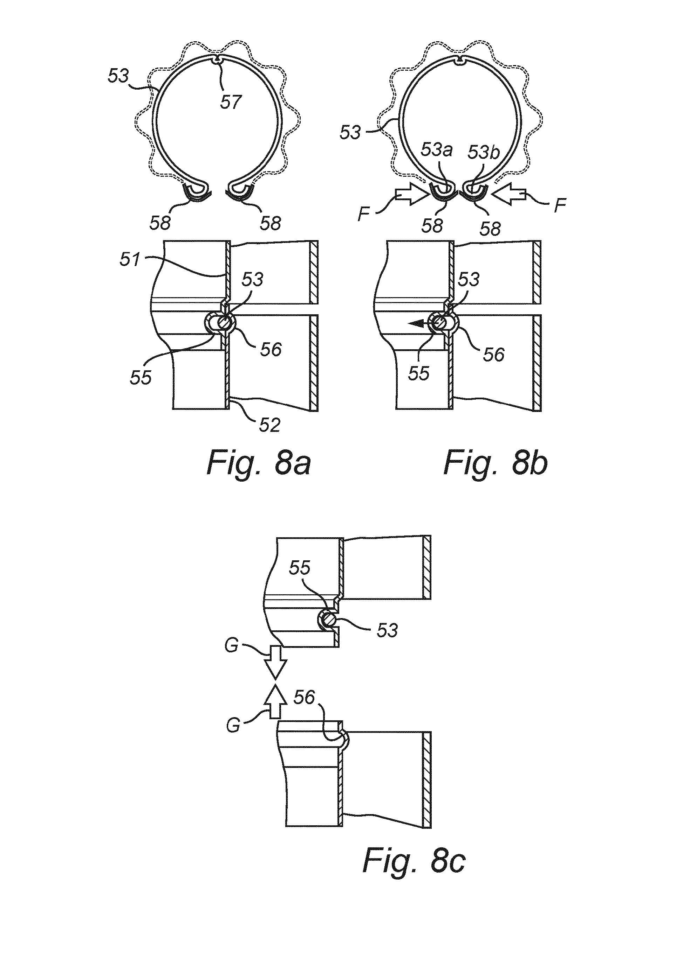

Due to the gas flow resistance of the fabric 29 of the filter bags 28, the pressure of the gas drops as the gas flows from the raw gas inlet chamber 24, to the cleaned gas outlet chamber 26. In order to keep the filter bags 28 expanded in their tubular shape while the flow of gas acts as a compressive force on the filter bags 28, each of the filter bags 28 is mounted on a baghouse filter basket 38 for supporting the filter bag 28. In Fig. 1, a small portion of a filter bag 28 is "broken away" so as to reveal a portion of such a baghouse filter basket 38. Each support basket 38 extends into the raw gas inlet chamber 24. Each baghouse filter basket 38 has an upper end 39 attached to one of said openings 23 of horizontal plate 22. Typically, a baghouse filter basket 38 may have a length of from about one meter to about twenty meters, and a width of from about ten centimeters to about one meter. In order to facilitate handling of the baghouse filter basket 38, e.g. during transport and/or storage, the baghouse filter cage 38 may be assembled from several shorter baghouse filter basket segments, as will be explained in more detail hereinafter with reference to Figs. 8a-c.

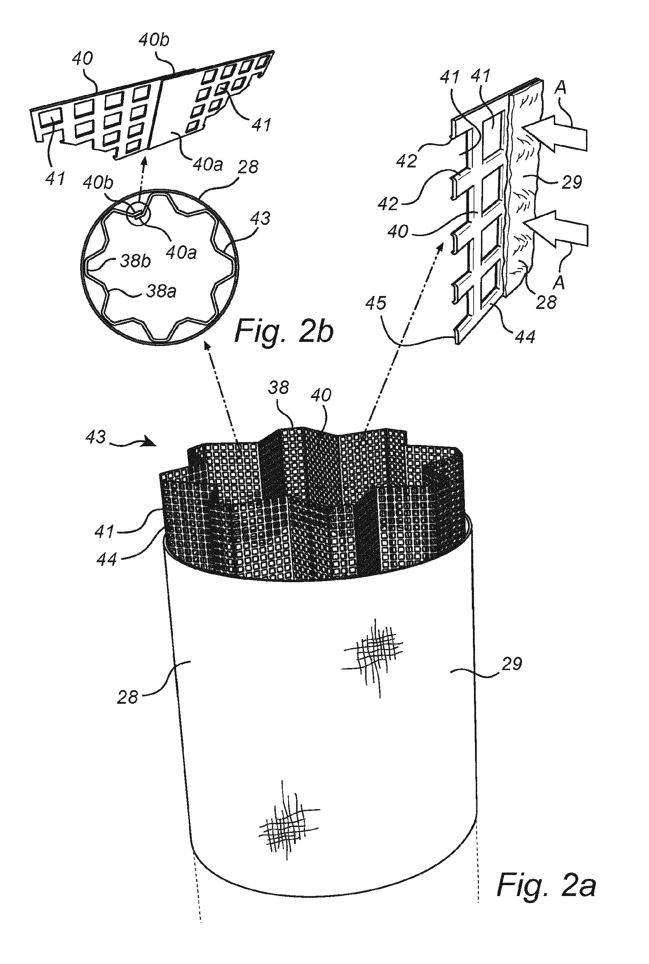

Fig. 2a and 2b schematically illustrates a filter bag basket 38 supporting a baghouse filter bag 28. The basket 38 comprises an elongated sheet material, in the form of a steel plate 40, which is provided with a plurality of punched surface openings 41. Since the surface openings 41 are formed by means of punching each surface opening 41 has rounded edges 42 at one side 44 of the plate 40, as illustrated in the enlarged part of Fig. 2a. At the opposite side 45 of the plate 40, i.e. the inner side of the hollow body 43, the surface openings 41 may have sharp edges due to the punching of the steel plate 40. To avoid bag wear the side 44 having surface openings 41 with rounded edges 42 is arranged to support the filter bag 29. The punched steel plate 40 is formed to a hollow body 43 having wave-shaped cross section, as best illustrated in Fig. 2b. A first 40a and a second 40b coupling edge of the punched steel plate 40 are connected to each other to form the basket 38, which supports the bag 28. The coupling edges 40a, 40b may be joined to each other in a permanent manner, e.g. by means of welding or by a hinge joint. Alternatively, the coupling edges may be joined in a releasably manner, e.g. by means of a snap-lock device. In this embodiment the first 40a and second 40b coupling edges are welded together, which provides a very robust and dimensionally stable basket 38. The steel plate 40 is arranged such that each surface opening 41 has rounded gas inlet edges 42 as seen from an outer side 44 to an inner side 45 of the hollow body 43, as illustrated in the enlarged part of Fig. 2a. Hence, the outer side 44 of the hollow body 43 is adapted to support the filter bag 28 in a smooth manner, thereby minimizing wear of the bag material 29. In Figs. 2a and 2b the filter bag 28 is shown in an expanded state, i.e. during removal of collected dust particles from the filter bag 28.

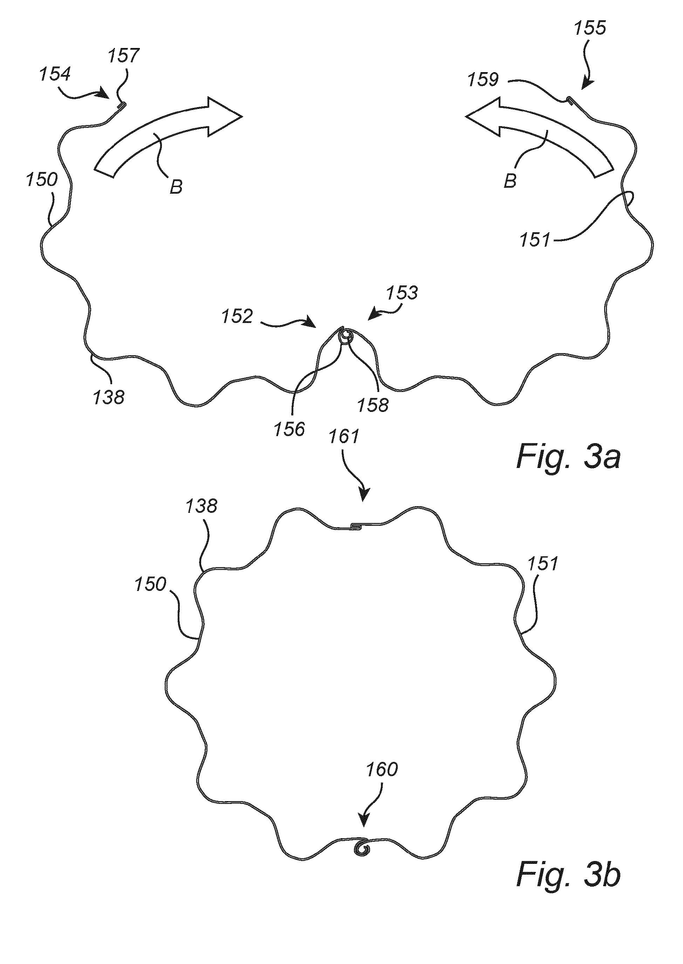

A filter basket according to the present disclosure may be formed from separate body wall elements. Hereinafter a filter basket 138 according to a second embodiment of the present disclosure will be described with reference to Figs. 3a and 3b. Many features disclosed in the first embodiment are also present in the second embodiment with similar reference numerals identifying similar or same features. Having mentioned this, the description will focus on explaining the differing features of the second embodiment.

The filter basket 138 comprises a first 150 and a second 151 body wall element which are interconnected along longitudinal coupling edges 152, 153. Each of the first 150 and second 151 body wall elements is formed from a steel plate which is provided with a plurality of punched surface openings having rounded gas inlet edges. Each of the first 150 and second 151 body wall segments has a first 152, 153 and a second 154, 155 coupling edge respectively. The first coupling edge 152 of the first wall element 150 is bent or configured to form a hinge-joint portion 156 and the second coupling edge 154 of the first body wall element 150 is bent or configured to form a snap-lock portion 157. The first coupling edge153 of the second body wall element 151 is bent or configured so as to form a complementary hinge-joint portion 158 for attachment to the hinge-joint portion 156 of the first coupling edge 152 of the first body wall element 150. The second coupling edge155 of the second body wall element 151 is bent or configured so as to form a complementary snap-lock portion 159 for attachment to the snap-lock portion 157 of the first body wall element 150.

Upon assembly of the basket 138 at site of use the first 150 and second 151 body wall elements are rotated around a hinge axis, in a direction towards each other, as illustrated by the arrows B in Fig. 3a, until the bent snap-lock portion 157 of the first body wall element 150 is engaged with the bent snap-lock portion 159 of the second body wall element 151. In the assembled state, illustrated in Fig. 3b, the snap-lock portion 157 of the first body wall element 150 receives the snap-lock portion 159 of the second body wall element 151. Such a snap-lock device allows a quick, simple and tool-free assembly of the bag filter basket 138.

Two longitudinal first coupling edges 152, 153 of the first 150 and second 151 body wall segments are thus hingedly connected to each other through a hinge joint 160 and two longitudinal second coupling edges 154, 155 of the first 150 and second 151 body wall segments are connected through a snap-lock joint 161. Hence, such a bag filter basket 138 may be transported in a partly assembled state and assembled at the site of use.

In an alternative embodiment such body wall elements may instead be connected through a first and a second snap-lock joint 161 of the type shown in Fig.3. Then the body wall elements 150, 151 may be transported as separate parts and assembled at the site of use, which may further reduce transportation costs since it provides for space-efficient stacking of the body wall elements.

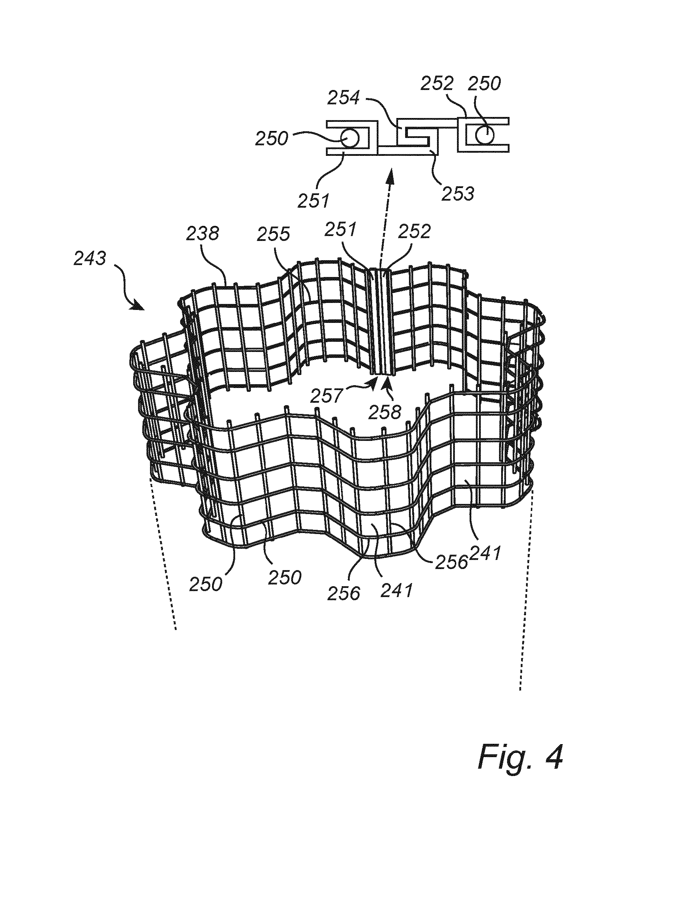

Fig. 4 schematically illustrates a filter bag basket 238 according to a third embodiment of the present disclosure. The basket 238 comprises an elongated sheet material having surface openings 241. The sheet material is formed from a welded metal wire mesh 255 comprising circular wires 250 having a diameter preferably in the range of 0.4-2 mm. The wire mesh 255 is formed to a hollow body 243 having wave-shaped cross section. The circular wires 250 of the wire mesh 255 form rounded gas inlet edges 256 of the surface openings 241. A first coupling edge 257 of the sheet material is rigidly connected to a second coupling edge 258 of the sheet material, thereby forming a hollow body. To this end, the first coupling edge 257 is provided with a coupling element 251 having a bent snap-lock portion 253 and the second coupling edge 258 is provided with a coupling element 252 having a bent snap-lock portion 254, as illustrated in the enlarged part of Fig. 4. Each of the coupling elements 251, 252 is in this case welded to a respective wire portion of the wire mesh 255. The snap-lock portion 253 of the first coupling elements 251 is engaged with the snap-lock portion 254 of the second coupling element 252. Alternatively, the coupling edges may e.g. be permanently connected, e.g. by welding.

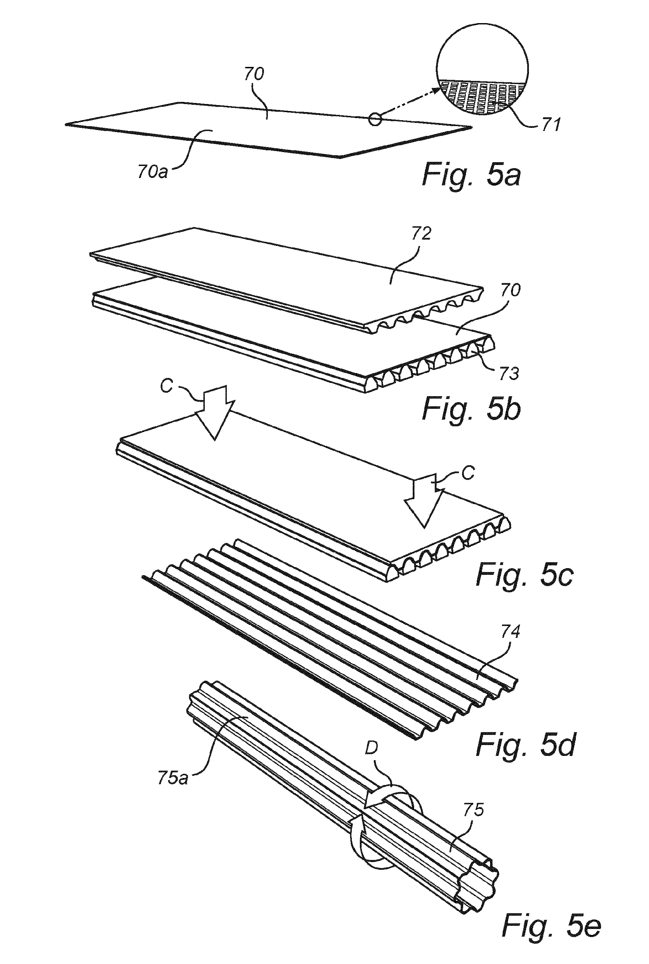

Hereinafter a method of forming a bag filter basket will be schematically described with reference to Figs. 5a-e.

In a first step a blank 70 of sheet material having a plurality of surface openings 71 with rounded inlet edges at a first side 70a of the blank 70 is provided, as illustrated in Fig. 5a.

The blank 70 is then placed between an upper 72 and a lower part 73 of an forming tool, as illustrated in in Fig. 5b, in which forming tool the blank 70 is pressed between the upper 72 and lower 73 parts of the forming tool, as illustrated in in Fig. 5c, thereby forming a corrugated blank 74, which is illustrated in Fig. 5d.

Then a hollow body 75, having the first side 70a with the rounded inlet edges forming the outer side 75a of the hollow body 75, is formed from the corrugated blank 74 and a first and a second coupling edge of the corrugated blank 74 are welded together, thereby forming the bag filter basket. Hence, a hollow body 75 having wave-shaped cross section and having the first side 70a with the rounded inlet edges forming the outer side 75a of the hollow body 75 is formed from the corrugated blank 74.

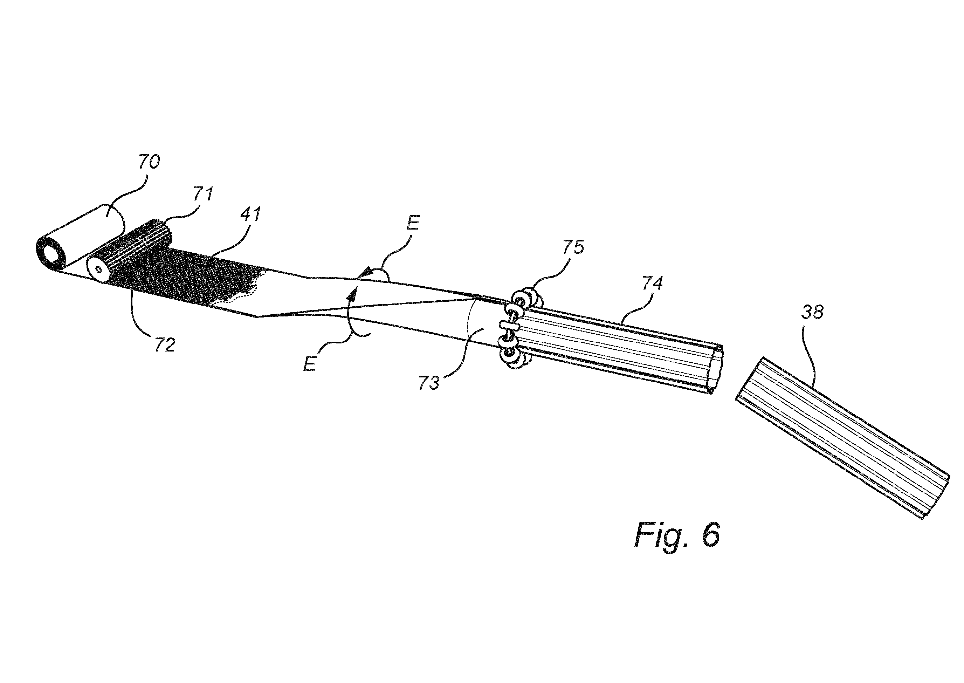

In an alternative embodiment a roll forming process may instead be utilized to form the bag filter basket. By way of example steps of such a roll forming process, in which process a bag filter basket 38 is fabricated starting from a blank of sheet material provided from a coil of sheet metal 70, is schematically illustrated in Fig. 6. Surface openings 41 with rounded edges are formed by a first roller 71 having protrusions 72. A hollow body 73 is then formed by a first set of rollers (not shown), as indicated by the arrows E. A first and a second coupling edge are then joined together (not shown), e.g. by welding, to form a closed section. Then, a profile 74 having wave-shaped section is formed by a second set of rollers 75. Finally, the profile 74 is cut by a cutting tool (not shown) e.g. in the form of a travelling cut, thereby forming the bag filter basket 38. Hence, starting from a roll of solid plate all production steps needed to form the final bag filter basket may be included in the roll forming process. This embodiment is preferred since a bag filter basket may be formed in a very cost efficient manner.

Roll forming, as is further described in e.g. EP1018378 A1, is well suited for elongated products.

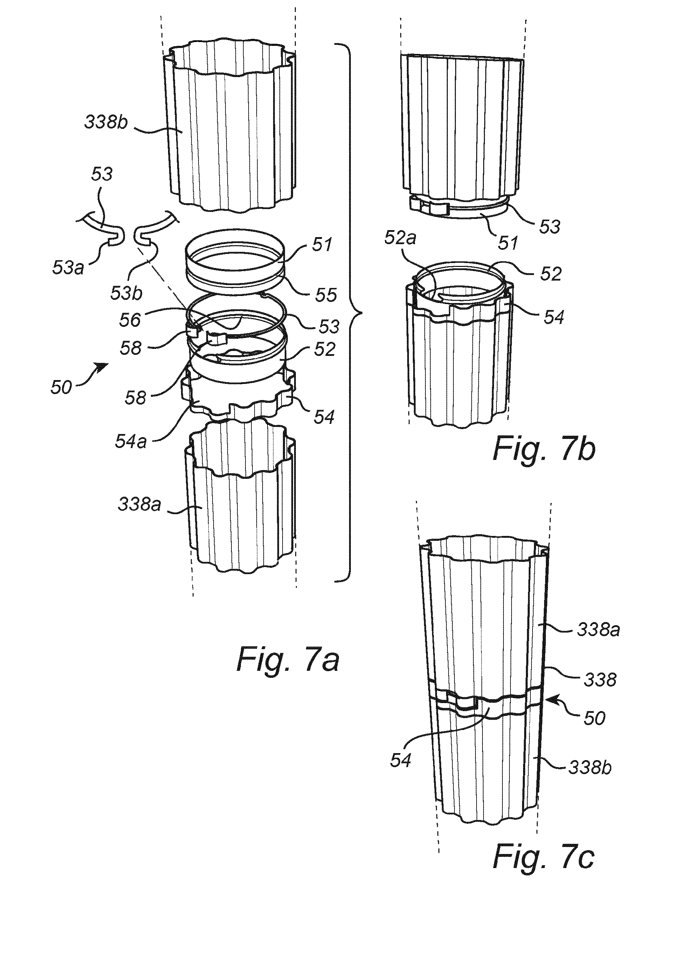

Figs. 7a-c illustrate a first, lower bag filter basket segment 338a, a second, upper bag filter basket segment 338b and a coupling device 50 for connecting the basket segments 338a, 338b to each other. Each of the lower 338a and upper 338b bag filter basket segments has a wave-shaped cross section, as best illustrated in Fig. 7a. The upper bag filter basket segment 338b is, at its lower orifice, provided with an inner coupling member 51 in the form of an inner circumferential coupling ring. The lower bag filter basket segment 338a is, at its upper orifice, provided with an outer coupling member 52 in the form of an outer circumferential coupling ring. The inner 51 and outer 52 coupling member may, e.g., be welded to the upper 338b and lower 338a bag filter segment 338b respectively.

In a locking state the outer 52 and inner 51 coupling ring of the coupling device 50 are arranged such that they partly overlap each other. The coupling device 50 further comprises a resilient locking member 53 in the form of a tension ring, which is arranged between the inner 51 and outer 52 coupling ring, for locking the bag filter basket segments 338a, 338b together. To this end the outer coupling member 52, which is arranged at the lower bag basket segment 338a, has an interior facing slot 56 for receiving the resilient locking member 53 and the inner coupling member 51, which is arranged at the upper bag filter basket segment 338b, has an exterior facing slot 55 for receiving the resilient locking member 53.

The exterior slot 55 of the inner coupling member 51 is configured to fully accommodate the locking member 53 when the locking member 53 is in a mounting state, illustrated in Fig. 8b. Both slots 55, 56 are configured to partly accommodate the locking member 53 when the locking member 53 is in a locking state, illustrated in Fig. 8a, such that the inner coupling member 51 is locked to the outer coupling member 52. The resilient locking member 53 is thus movable between a locking state, illustrated in Fig 8a, and a mounting state, illustrated in Fig. 8b, against an intrinsic spring force action of the resilient locking member 53.

In the locking state, illustrated in Fig. 8a, the inner 51 and outer 52 coupling ring, and thus the lower 338a and upper 338b bag filter basket segment, are locked to each other by the resilient locking member 53. Then the locking member 53 is held in the locking state by the intrinsic spring action thereof. Each of the two bag filter basket segments 338a, 338b may, e.g., be a bag filter basket in accordance with the teachings hereinbefore with reference to Figs. 2a and 2b. Hence, each of the lower 338a and upper 338b bag filter basket segment is provided with surface openings (not shown) having rounded gas inlet edges as the bag filter basket 38 described with reference to Figs. 2a and 2b.

Fig. 7b illustrate each of the lower 338a and upper 338b bag filter basket segments in an assembled state and separated from each other. As illustrated in Fig. 7b, the locking member 53 is positioned in the exterior facing slot 55 of the inner coupling member 51.

Fig. 7c illustrate the lower 338a and upper 338b bag filter basket segments connected to each other, thereby forming a bag filter basket 338. In this case two segments are connected to form the bag filter basket 338. It is however realized that more than two such bag filter segments may be connected in series using a coupling device according to the present disclosure to form a bag filter basket for supporting a baghouse filter bag.

Figs. 8a-c illustrate how an inner coupling member 51 of the upper bag filter segment 338b may be connected with an outer coupling member 52 of the lower bag filter basket segment 338a using a coupling device 50 according to the present disclosure. The resilient locking member 53 may be contracted by applying a force to the end portions 53a, 53b thereof, as illustrated by the arrows F in Fig. 8b. By contracting the locking member 53 to a mounting state the locking member 53 will be fully accommodated in the exterior slot 55 of the inner coupling member 51, as illustrated in Fig. 8b.

When the locking member 53 is held in the mounting state, illustrated in Fig. 8b, it allows the segments 338a, 338b to be coupled to each other such that the inner coupling member 51 partly overlaps the outer coupling member 52, as illustrated in Fig. 8b. Upon such coupling the segments 338a, 338b are thus moved from an uncoupled state, illustrated in Fig. 8c, to a coupled state, illustrated in Fig. 8b, as indicated by the arrow G in Fig. 8c. By removing the force holding the locking member 53 in its mounting state, the resilient locking member 53 will, due to the intrinsic spring force action thereof, move outwardly toward the interior slot 56 of the outer coupling member 52 until it is accommodated therein.

To unlock the basket joint, the locking member 53 is thus pressed together by an operator such that the diameter of the locking ring 53 is reduced. Then it is possible to pull the basket segments apart from each other. During assembly, the opposite is performed. The resilient locking member 53 is pressed to a smaller diameter, which enables the locking member to fit in one of the slots 55 of the basket joint.

The coupling device 50 comprises a covering portion. The covering portion comprises a metal strip 54 having wave-shaped cross section. Hence, the covering portion 54 has a profile similar to each of the first 338a and second 338b bag filter basket segments, as best illustrated in Fig. 7c. The covering portion further comprises metal strips 58 which are arranged at the locking member 53 to cover the end portions 53a, 53b thereof, as illustrated e.g. in Figs. 7a and 8a. The covering portion 54, 58, ensures a constant cross section of the bag filter basket 338 at the joint between the lower 338a and upper 338b bag filter basket segment.

The metal strip 54 has a cut-out portion 54a to ensure space for the locking member 53 and the metal strips 58. The outer coupling member 52 also has a cut-out portion 52a to ensure space for the locking member 53 and the metal strips 58.

As best illustrated in Fig. 8a the locking ring 53 has an interior facing notch 57 for preventing rotation of the upper basket segment relative to the lower basket segment. The notch 57 extends inwardly and engages a part of the upper basket segment 338b, thereby preventing relative rotation between the upper 338b and lower 338a basket segments.

It will be appreciated that numerous variants of the embodiments described above are possible within the scope of the appended claims.

Hereinbefore it has been described that coupling edges of a filter bag basket may be permanently joined by means of welding. It will be appreciated that other joining processes, such as, e.g., brazing, soldering, riveting, gluing or seam closing, may be used to permanently join coupling edges of a filter bag basket according to the present disclosure.

Hereinbefore square shaped surface openings have been shown. It will be appreciated that the surface openings may have another shape, such as, e.g., a rectangular, oval or circular shape.

Hereinbefore it has been described that a wire mesh material may comprise wires having a circular cross section. It will be appreciated that other cross sections, such as elliptical cross-sections, may be possible to use in such a wire mesh material.

To summarize, a bag filter basket for supporting a baghouse filter bag comprises a sheet material provided with a plurality of surface openings and formed to a hollow body having wave-shaped cross section. The surface openings have rounded gas inlet edges as seen from an outer side to an inner side of the hollow body, the outer side of the hollow body being adapted to support the filter bag.
While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. Bag filter basket for supporting a baghouse filter bag (28), which basket comprises
a sheet material (40; 255) provided with a plurality of surface openings (41; 241) and formed to a hollow body (43; 243) having wave-shaped cross section,
**characterized in**
**that** said surface openings (41; 241) have rounded gas inlet edges (42; 256) as seen from an outer side (44) to an inner side (45) of the hollow body (43; 243), the outer side (44) of the hollow body (43; 243) being adapted to support the filter bag (28).

2. Bag filter basket according to claim 1, wherein the rounded edges (42; 256) at the surface openings (41; 241) has a radius in the range of 0.2-3 mm.

3. Bag filter basket according to any of the preceding claims, wherein the sheet material is a wire mesh material (255).

4. Bag filter basket according to claim 3, wherein the wires (250) of the wire mesh material (255) have a circular cross section with a diameter of 0.4-2 mm.

5. Bag filter basket according to any of claims 3-4, wherein the distance between adjacent wires (250) of the wire mesh material (255) is in the range of 3-25 mm and more preferably in the range of 5-15 mm.

6. Bag filter basket according to any of claims 1-2, wherein the sheet material is a punched sheet material (40).

7. Bag filter basket according to claim 6, wherein the rounded inlet edges (42) of the surface openings (41) having a curvature over the thickness of the sheet material.

8. Bag filter basket according to any of the preceding claims, wherein a first coupling edge (257) of the sheet material (255) is connected to a second coupling edge (258) of the sheet material (255) by means of a releasable fastening arrangement (253, 254).

9. Bag filter basket according to any of the preceding claims, wherein the hollow body comprises a first body wall element (150) and a second body wall element (151), said first (150) and second (151) body wall elements being interconnected along longitudinal coupling edges (152, 153, 154, 155) by means of a fastening arrangement (160, 161).

10. Bag filter basket according to claim 9, wherein said fastening arrangement comprises a hinge device (156, 158, 160) adapted to permanently join a longitudinal coupling edge (152) of the first body wall element (150) with a first longitudinal coupling edge (153) of the second body wall element (151).

11. Bag filter basket according to claim 9, wherein said fastening arrangement comprises a fastening device (155, 157, 161) adapted to releasably join a second coupling edge (154) of the first basket wall element (150) with a second coupling edge (155) of the second basket wall element (151).

12. A method of forming a filter bag basket, **characterized in** said method comprising:
providing a blank (70) of sheet material having a plurality of surface openings (71) with rounded gas inlet edges at a first side (70a) of the blank (70), and
forming from said blank (70) a hollow body (75) having wave-shaped cross section and having the first side with the rounded inlet edges forming the outer side (75a) of the hollow body (75), thereby forming the bag filter basket.

13. Method according to claim 12, wherein the step of forming from said blank (70) a hollow body (75) having wave-shaped cross section and having the first side (70a) with the rounded inlet edges forming the outer side (75a) of the hollow body (75) comprises passing the blank (70) of sheet material through a forming tool (72, 73).

14. Method according to claim 13, wherein said forming tool is a roll forming tool.

15. Method according to any of the claims 12-14, wherein the step of providing a blank (70) of sheet material having plurality of openings (71) with rounded gas inlet edges comprises punching, thereby providing the surface openings (71).

16. Method according to any of the claims 12-15, wherein the step of forming a hollow body (75) from said blank (70) of sheet material comprises providing at least a first (150) and a second (151) hollow body element and joining the at least two hollow body elements (150, 151) at longitudinal coupling edges (152, 153, 154, 155).

17. Bag filter basket for supporting a baghouse filter bag, which basket comprises a first (338a) and a second (338b) bag filter basket segment which are connected by a coupling device (50), the coupling device (50) comprising:
a resilient locking member (53),
an outer coupling member (52) arranged at the first bag filter basket segment (338a) and having an interior slot (56) for receiving the resilient locking member (53), and,
an inner coupling member (51) arranged at the second bag filter basket segment (338b) and having an exterior slot (55) for receiving the resilient locking member (53), wherein
one (55) of the inner (55) and outer (56) slots is configured to fully accommodate the locking member (53) when the locking member (53) is in a mounting state, and both slots (55, 56) are configured to partly accommodate the locking member (53) when the locking member (53) is in a locking state such that the inner coupling member (51) is locked to the outer coupling member (52).

18. Bag filter basket according to claim 17, wherein the resilient locking member (53) is configured to be contracted to be fully accommodated in one of the inner (55) and outer (56) slots.

19. Bag filter basket according to any of claims 17-18, wherein the resilient locking member (53) is a circumferential ring, preferably a tension ring.

20. Bag filter basket according to any of claims 17-19, wherein the coupling device (50) comprises a covering portion (54) having a profile similar to at least one of the first (338a) and second (338b) bag filter basket segments.

21. Method of supporting a baghouse filter bag (28) using a bag filter basket (38; 138; 238; 338) comprising
a sheet material (40; 255) provided with a plurality of surface openings (41; 241) and formed to a hollow body (43; 243) having wave-shaped cross section, that said surface openings (41; 241) have rounded gas inlet edges (42; 256) as seen from an outer side (44) to an inner side (45) of the hollow body (43; 243), the outer side (44) of the hollow body (43; 243) being adapted to support the filter bag (28), wherein the bag filter basket (38; 138; 238; 338) supports the filter bag.

22. Method of connecting a first bag filter basket segment (338a) to a second bag filter basket segment (338b) to form a bag filter basket (338) for supporting a baghouse filter bag using a coupling device (50), the coupling device (50) comprising:
a resilient locking member (53),
an outer coupling member (52) arranged at the first bag filter basket segment (338a) and having an interior slot (56) for receiving the resilient locking member (53), and,
an inner coupling member (51) arranged at the second bag filter basket segment (338b) and having an exterior slot (55) for receiving the resilient locking member (53), wherein
one (55) of the inner (55) and outer (56) slots is configured to fully accommodate the locking member (53) when the locking member (53) is in a mounting state, and both slots (55, 56) are configured to partly accommodate the locking member (53) when the locking member (53) is in a locking state such that the inner coupling member (51) is locked to the outer coupling member (52), wherein the coupling device (50) connects the first (338a) and second bag filter basket segments (338b).
